# EUROPEAN PATENT APPLICATION

(11) **EP 4 803 878 A1**
(43) Date of publication of application: **09.09.2026**
(21) Application number: 24897551.8
(22) Date of filing: 26.11.2024
(51) Int. Cl.: G01N 1/00, A61J 1/20, G01N 1/10

(54) **COLLECTING KIT**

(30) Priority: 28.11.2023 JP 2023200646
(71) Applicant: Terumo Kabushiki Kaisha, Tokyo 151-0072 (JP)
(72) Inventor: OKABE, Hiroshi, Fujinomiya-shi, Shizuoka 418-0004 (JP)
(74) Representative: TBK
(86) International application number: PCT/JP2024/041856
(87) International publication number: WO 2025/115867

(57) **Abstract**

A collection kit (10A) includes a collection member (14A). The collection member (14A) includes a plurality of accommodation chambers (30). The collection kit (10A) includes a plurality of outflow tube portions (34) and at least one exhaust portion (40). The plurality of outflow tube portions (34) are connected to the plurality of accommodation chambers (30), and transfer the collection target from a plurality of accommodation portions (22) to a plurality of sampling containers (90), respectively. The at least one exhaust portion (40) discharges the air inside the plurality of accommodation chambers (30) to the outside of the collection member (14A). In the above configuration, the collection member (14A) is made of an inflexible material.

## Description

### Technical Field

The present disclosure relates to a collection kit for transferring a collection target (mainly liquid medication) accommodated in a medical bag into a plurality of sampling containers.

### Background Art

Blood products include a red blood cell product, a plasma product, a platelet product, and a whole blood product. In order to ensure safety of the blood products, a small amount of a sample may be collected from a blood product to perform a culture test. In the culture test, the sample is collected into a culture bottle (sampling container), and the culture bottle is placed in an environment suitable for bacterial growth to detect the presence or absence of a pathogen.

Hereinafter, an operation procedure of transferring the platelet product from a platelet bag to two culture bottles will be described using a medical bag (hereinafter, referred to as platelet bag) accommodating the platelet product as an example.

A small-capacity collection bag is connected to the platelet bag, and a part of the platelet product in the platelet bag is transferred to the collection bag. After that, the collection bag is disconnected from the platelet bag. Next, in a clean bench, the collection bag is connected to a tube extending from a sample collection tube, and a prescribed amount of the platelet product is transferred from the collection bag to the sample collection tube with reference to scales of the sample collection tube. After that, two culture bottles are sequentially connected to the sample collection tube, and a prescribed amount of the platelet product is transferred to the two culture bottles. One of the two culture bottles is a culture bottle used for anaerobic culture, and the other is a culture bottle used for aerobic culture.

For example, the specification of U.S. Patent No. 8777921 discloses a collection kit for collecting a sample from a medical bag.

### Citation List

### Patent Literature

Patent Literature 1: U.S. Patent No. 8777921

### Summary of Invention

From the viewpoint of further improving the safety of the blood product, culture tests on all blood products are being considered. Therefore, it is required to improve the work efficiency of the culture test for the blood product. Furthermore, it is desirable that the amounts of the blood products to be dispensed into the culture bottles are substantially the same. In other words, it is desirable that the collection amount of the collection target in a plurality of sampling containers is substantially constant.

An object of the present disclosure is to solve the above-described problems.
(1) An aspect of the present disclosure is a collection kit for collecting a collection target accommodated in a medical bag into a plurality of sampling containers. The collection kit includes an inflow tube to which the medical bag is connected, and a collection member connected to a downstream side of the inflow tube.

The collection member includes a plurality of accommodation portions and a plurality of accommodation chambers respectively formed inside the plurality of accommodation portions and accommodating the collection target. The collection kit further includes a plurality of outflow tube portions that are connected to the plurality of accommodation chambers and transfer the collection target from the plurality of accommodation portions to the plurality of sampling containers, and at least one exhaust portion for discharging air inside the plurality of accommodation chambers to the outside of the collection member.

In the above configuration, the collection member is made of an inflexible material. Note that the "collection member exhibits inflexibility" means that the collection member has rigidity to an extent that the collection member is not substantially deformed when the collection target flows into each accommodation chamber and when the collection target flows out from each accommodation chamber to the sampling container. That is, the collection member is made of a rigid material and exhibits sufficient strength at the time of use. The elastic modulus of the material of the collection member is, for example, 20 kg/mm² or more, and thus it is difficult to crush the collection member with a finger. Thus, the collection member has the shape-retaining property. Therefore, each accommodation portion also has the shape-retaining property.

Accordingly, with the above configuration, when the collection target flows into each accommodation chamber, deformation of each accommodation portion is suppressed. Therefore, the amount of the collection target transferred from the medical bag to each accommodation chamber is substantially the same. That is, the accommodation amount of the collection target in each accommodation chamber is made constant. Therefore, the sampling amount of the collection target collected in each sampling container is stabilized.

(2) In the collection kit according to (1), the collection member may include a plurality of inflow tube portions that are respectively provided in the plurality of accommodation portions and respectively connected to the plurality of accommodation chambers, and the inflow tube may be connected to the plurality of inflow tube portions via a branch tube connected to a downstream end portion of the inflow tube.

According to this configuration, the collection target can be simultaneously dispensed to the plurality of accommodation chambers. Therefore, the sampling amount of the collection target collected in the sampling container is further stabilized. Furthermore, the inflow tube portions are a part of the collection member and thus exhibit inflexibility. Therefore, it is easy to connect the branch tube to the inflow tube portions.

(3) In the collection kit according to (2), the plurality of inflow tube portions may respectively serve as the plurality of outflow tube portions, and the branch tube may include a connection portion to which outflow ports respectively communicating with the plurality of outflow tube portions are connected.

In this case, since the number of tube portions is reduced, the configurations of the collection member and the collection kit can be simplified.

(4) In the collection kit according to (2), a junction tube, in which the plurality of inflow tube portions and the plurality of outflow tube portions are separate bodies, may be provided, the junction tube being connected to a downstream side of the plurality of outflow tube portions.

In this case, one adapter is connected to the junction tube, and the sampling container is attached to the adapter. After the collection target is transferred from one of the plurality of accommodation chambers to the sampling container, another sampling container is attached to the adapter, and the collection target is transferred from another one of the plurality of accommodation chambers to the sampling container. As understood from the above, according to this configuration, since the number of adapters can be one, the configuration of the collection kit can be simplified.

(5) In the collection kit according to any one of (1) to (4), the collection member may include a tube protection portion that covers the inflow tube.

Since the inflow tube is surrounded by the tube protection portion, the inflow tube is prevented from being erroneously crushed. As a result, the inflow tube is prevented from being occluded due to crushing. Therefore, it is easy to transfer the collection target from the medical bag to each accommodation chamber.

(6) In the collection kit according to (5), the tube protection portion may be integrally continuous with the plurality of accommodation portions.

It is possible to manufacture the collection member in which the tube protection portion and the plurality of accommodation portions are integrally formed. Therefore, it is possible to efficiently configure the collection member as compared with the case where the tube protection portion and the plurality of accommodation portions are individually manufactured and then the plurality of accommodation portions are connected to the tube protection portion.

(7) In the collection kit according to any one of (1) to (6), a material of the collection member may be a resin.

Since the resin is lightweight, the weight of the collection kit can be reduced. Moreover, since the resin is rigid, it is easy to configure the collection member having inflexibility.

(8) In the collection kit according to (7), the resin may be transparent or semi-transparent.

It is possible to easily confirm the accommodation amount of the collection target inside each of the plurality of accommodation portions (accommodation chambers).

(9) In the collection kit according to any one of (1) to (8), the exhaust portion may include an exhaust cylinder, and the exhaust cylinder may include a cylinder body having an opening, and a lid portion capable of opening and closing the opening of the cylinder body.

When the collection target is transferred from the medical bag to each accommodation chamber, the air in each accommodation chamber can be exhausted to the outside of the collection member through the opening by opening the lid portion. After the transfer of the collection target from the medical bag to each accommodation chamber is completed, a state where the collection target is accommodated in each accommodation chamber can be maintained by closing the lid portion.

(10) In the collection kit according to (9), the exhaust cylinder may include a hydrophilic filter.

The hydrophilic filter allows passage of the air before being wetted with the collection target that is a liquid, and suppresses the passage of the air after being wetted with the collection target. Accordingly, even in a case where the lid portion is opened and the atmosphere (air) is introduced through the opening after the collection target overflows from each accommodation chamber and wets the hydrophilic filter, the inflow of the air into each accommodation chamber is suppressed. Therefore, the collection target transferred to the sampling container can be used as a sample of an anaerobic culture test.

(11) In the collection kit according to any one of (1) to (10), at least one adapter that is connected to a downstream side of the plurality of outflow tube portions and connectable to the plurality of sampling containers may be provided.

The adapter allows the accommodation portion and the sampling container to be easily connected to each other via the outflow tube portions. Furthermore, since the collection kit before use includes the adapter, the collection kit allows the operator to eliminate the need to connect the adapter to the outflow port one by one. As a result, the collection operation can be efficiently performed.

According to the present disclosure, the amount of the collection target transferred from the medical bag to the plurality of accommodation chambers is substantially the same. Therefore, the sampling amount of the collection target collected in each of the plurality of sampling containers is stabilized.

### Brief Description of Drawings

[Fig. 1] Fig. 1 is a schematic perspective view of a collection kit according to a first embodiment.
[Fig. 2] Fig. 2 is a schematic front view of a collection kit according to the first embodiment.
[Fig. 3] Fig. 3 is a schematic front view illustrating a state where a medical bag is connected to the collection kit of Fig. 2.
[Fig. 4] Fig. 4 is a schematic perspective view of a collection kit jig for transferring a collection target from the collection kit of Fig. 2 to a sampling container.
[Fig. 5] Fig. 5 is a schematic front view of a kit holding portion constituting a collection kit jig.
[Fig. 6] Fig. 6 is a schematic perspective view of a cover constituting a collection kit jig as viewed from the rear.
[Fig. 7] Fig. 7 is a longitudinal sectional view of a main part of a collection kit jig.
[Fig. 8] Fig. 8 is a schematic perspective view illustrating a state where a kit holding portion is lowered from Fig. 4.
[Fig. 9] Fig. 9 is a schematic front view illustrating a state where a collection target is transferred from a collection kit to a sampling container.
[Fig. 10] Fig. 10 is a schematic front view of a collection kit according to a second embodiment.
[Fig. 11] Fig. 11 is a schematic front view of a collection kit according to a third embodiment.
[Fig. 12] Fig. 12 is a schematic front view of a collection kit according to a fourth embodiment.
[Fig. 13] Fig. 13 is a schematic front view of a collection kit according to a fifth embodiment.
[Fig. 14] Fig. 14 is a schematic front view of a collection kit according to a sixth embodiment.
[Fig. 15] Fig. 15 is a schematic front view of a collection kit according to a seventh embodiment.

### Description of Embodiments

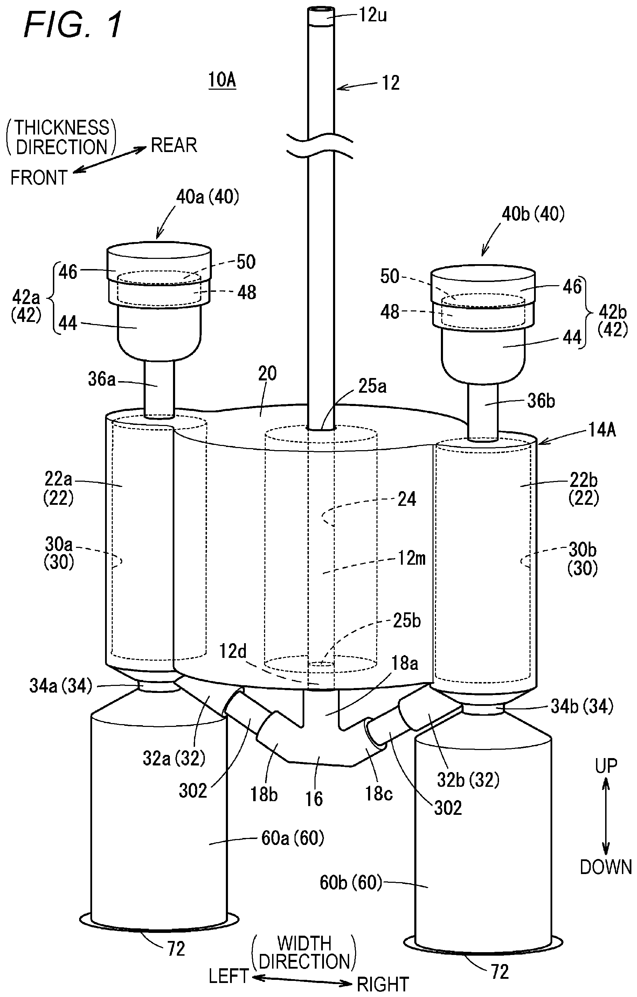

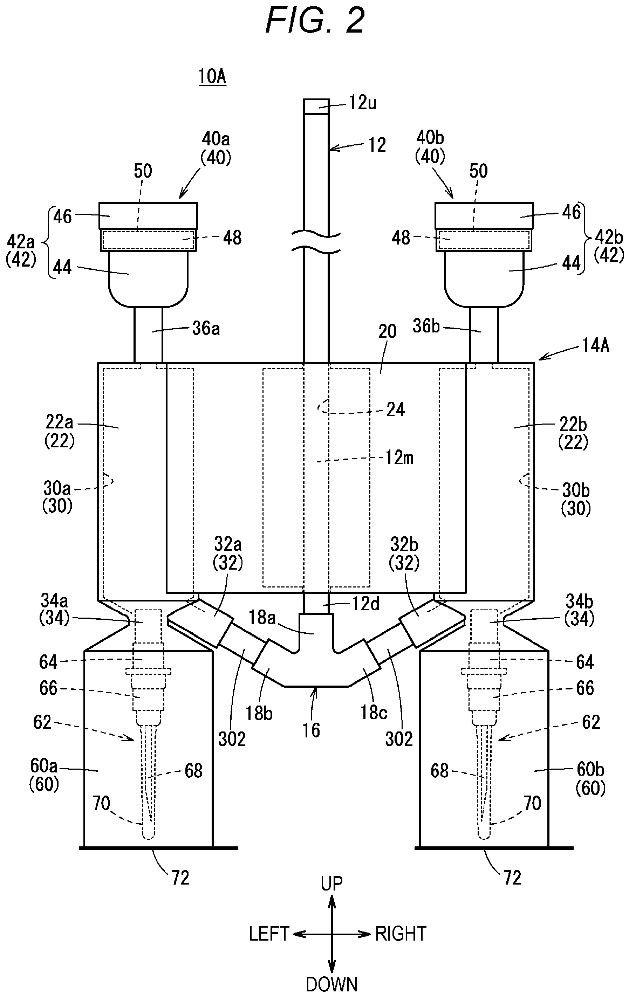

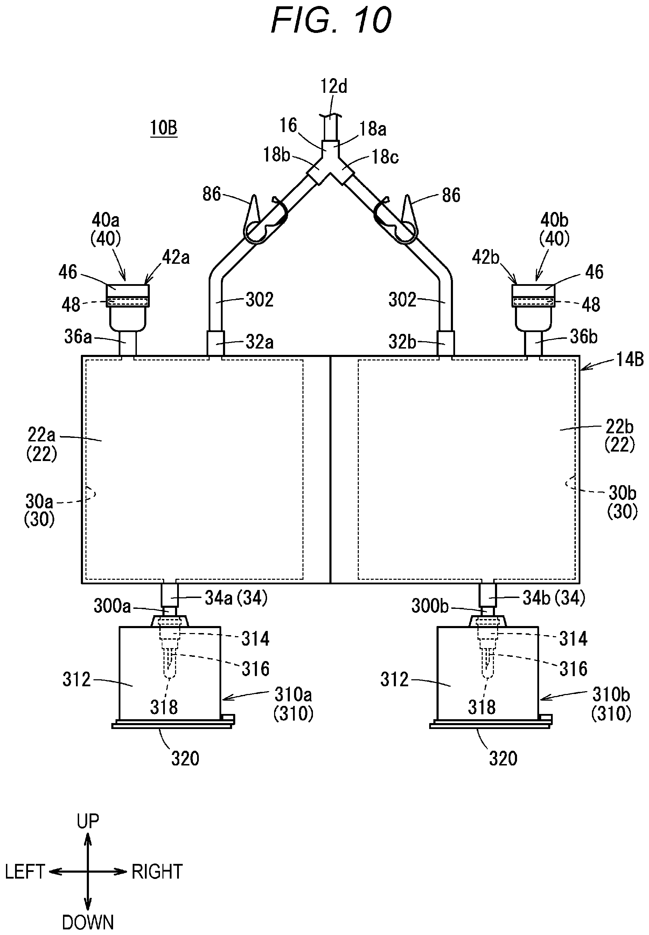

In the following description, the "up", "down", "left", and "right" correspond to the up, down, left, and right directions illustrated in Figs. 1 and 2, respectively Furthermore, the "width direction" refers to the left-right direction in Figs. 1 to 2. The "thickness direction" refers to a direction orthogonal to the up-down direction and the width direction. A collection kit 10A illustrated in Figs. 1 and 2, and collection kits 10B to 10G illustrated in Figs. 10 to 15 are typically used in an orientation in which the up-down direction in Figs. 1 and 2, and Figs. 10 to 15 is aligned with the vertical direction.

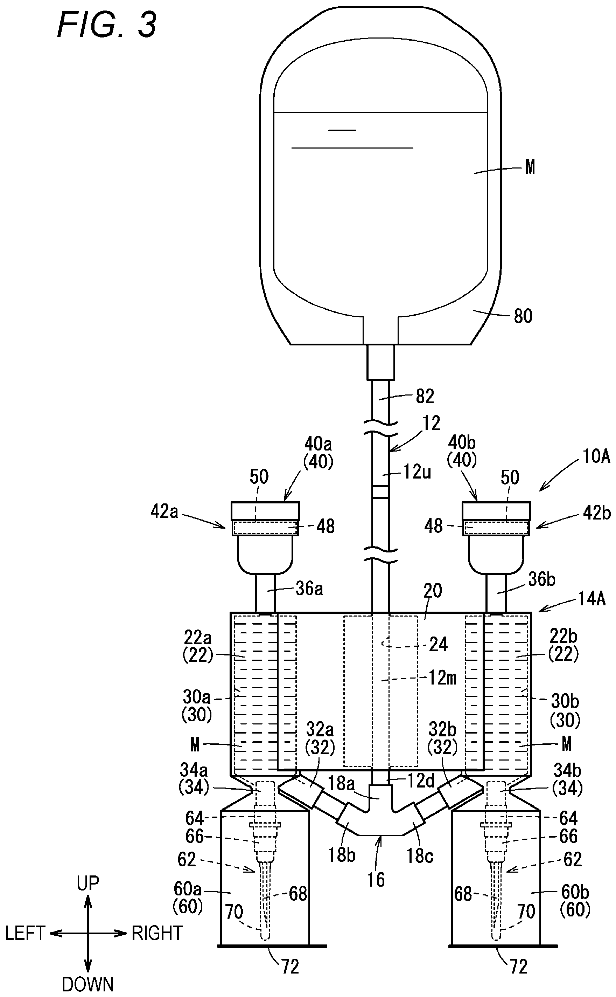

The collection target of the collection kit 10A illustrated in Figs. 1 and 2 is, for example, a blood product such as a platelet product. The collection target may be a medication other than the blood product. The collection target may be a liquid sample other than the medication. The medical bag 80 (see Fig. 3) may be a blood bag system for centrifuging blood containing a plurality of components into a plurality of components having different specific gravities (for example, three components of a low-specific-gravity component, a medium-specific-gravity component, and a high-specific-gravity component, or two components of a low-specific-gravity component and a high-specific-gravity component), and separately accommodating and storing each of the components separately in different bags. In this case, the collection kit 10A may be connected to the blood bag system. The same applies to the collection kits 10B to 10G illustrated in Figs. 10 to 15.

Hereinafter, an example of using a platelet product M (see Fig. 3) as the blood product will be described in all of the first to seventh embodiments. Alternatively, the blood product collected by the collection kits 10A to 10G may be a red blood cell product, a plasma product, or a whole blood product.

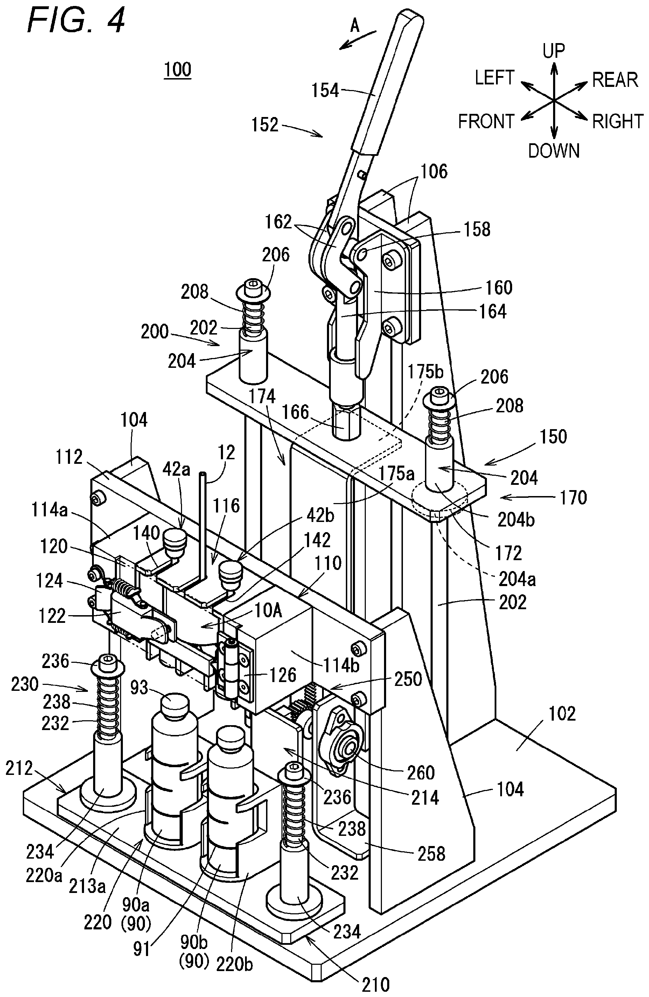

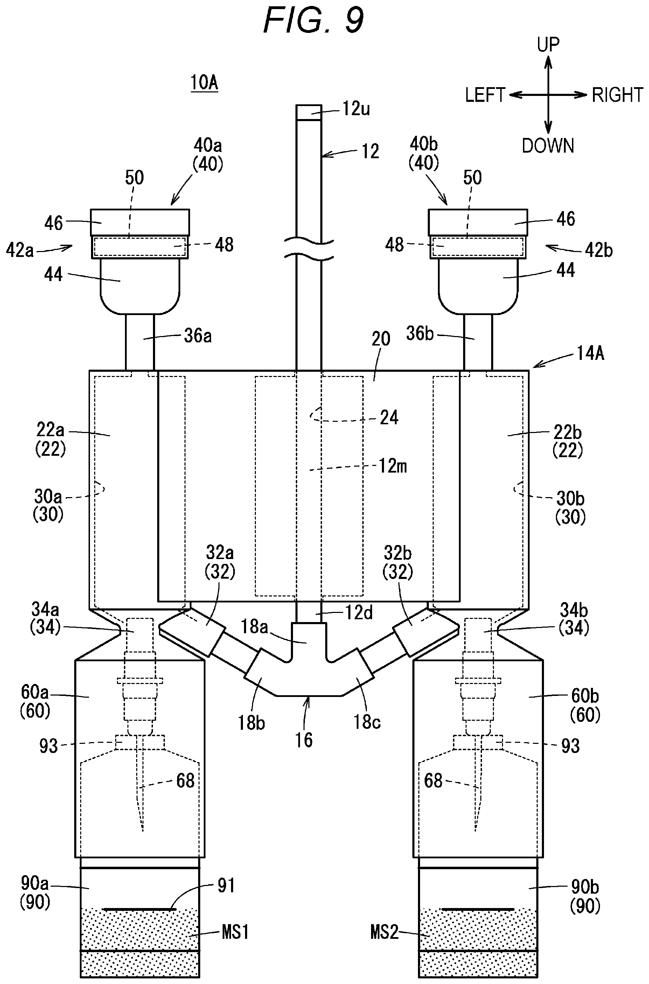

The collection kits 10A to 10G are used for, for example, a culture test for confirming the safety of the platelet product M in a facility such as a blood center for manufacturing blood products. In the above aspect, a plurality of sampling containers 90 (a first sampling container 90a and a second sampling container 90b) illustrated in Figs. 4 and 9 are culture bottles.

In the culture test, a test for culture of anaerobic bacteria and a test for culture of aerobic bacteria are performed. Therefore, for the culture test, the first sampling container 90a for anaerobic culture and the second sampling container 90b for aerobic culture are used. The collection kits 10A to 10G are used to collect a liquid sample (platelet product M illustrated in Fig. 3) and dispense a predetermined amount of the sample into the first sampling container 90a and the second sampling container 90b.

### (1) Configuration of Collection Kit

First, the collection kit 10A according to the first embodiment will be described with reference to Figs. 1 to 3. As illustrated in Figs. 1 and 2, the collection kit 10A includes an inflow tube 12 and a collection member 14A.

The inflow tube 12 is, for example, a transparent or semi-transparent medical tube made of a thermoplastic resin such as a vinyl chloride resin. The inflow tube 12 can be connected to or separated from another medical tube without exposing the inside thereof to the outside air by using an aseptic connection device, a tube sealer, or the like. The inflow tube 12 includes an upstream end portion 12u, a midstream portion 12m, and a downstream end portion 12d. In an unused state where the collection kit 10A is provided as a product, the upstream end portion 12u is sealed by welding. Hereinafter, the unused state is also referred to as an "initial state". As illustrated in Fig. 3, when the platelet product M accommodated in the medical bag 80 is transferred to the collection member 14A, the medical bag 80 is connected to the upstream end portion 12u of the inflow tube 12.

Returning to Figs. 1 and 2, the midstream portion 12m is accommodated inside from the upper portion of the collection member 14A. The downstream end portion 12d is exposed below the collection member 14A. The downstream end portion 12d is connected to the collection member 14A via a branch tube 16.

Specifically, the branch tube 16 includes a main connection portion 18a, a first sub-connection portion 18b, and a second sub-connection portion 18c. The downstream end portion 12d of the inflow tube 12 is connected to the main connection portion 18a. A first inflow tube portion 32a constituting the collection member 14A is connected to the first sub-connection portion 18b. A second inflow tube portion 32b constituting the collection member 14A is connected to the second sub-connection portion 18c. As a result, the inflow tube 12 and the first inflow tube portion 32a are connected to each other, and the inflow tube 12 and the second inflow tube portion 32b are connected to each other. The first inflow tube portion 32a and the second inflow tube portion 32b constituting an inflow tube portion 32 will be described later.

The collection member 14A includes a tube protection portion 20 and a plurality of accommodation portions 22 provided outside the tube protection portion 20 in the width direction. As illustrated in Fig. 1, the tube protection portion 20 is a cylindrical body having a cylindrical shape. The plurality of accommodation portions 22 are cylindrical bodies having a cylindrical shape with a diameter smaller than that of the tube protection portion 20. The tube protection portion 20 and the plurality of accommodation portions 22 may be cylindrical bodies having a polygonal shape such as a quadrangle. Note that the tube protection portion 20 is not an essential component. The plurality of accommodation portions 22 may be integrally connected to each other.

An insertion hole 24 extending along the up-down direction is formed in the tube protection portion 20. The midstream portion 12m of the inflow tube 12 is inserted into the insertion hole 24. In other words, the midstream portion 12m is covered by the tube protection portion 20. Thus, the midstream portion 12m is protected by the tube protection portion 20. The upstream end portion 12u of the inflow tube 12 is exposed above the tube protection portion 20 from an upper opening 25a (see Fig. 1) formed in the upper surface of the tube protection portion 20. The downstream end portion 12d of the inflow tube 12 is exposed to the lower side of the tube protection portion 20 from a lower opening 25b formed in the lower surface of the tube protection portion 20.

In the illustrated example, the plurality of accommodation portions 22 include a first accommodation portion 22a and a second accommodation portion 22b. That is, the number of the plurality of accommodation portions 22 is two. The number of the plurality of accommodation portions 22 may be three or more. The first accommodation portion 22a and the second accommodation portion 22b are integrally continuous with the tube protection portion 20. Alternatively, the tube protection portion 20, the first accommodation portion 22a, and the second accommodation portion 22b may be formed as separate members, and the first accommodation portion 22a and the second accommodation portion 22b may be individually connected to the tube protection portion 20.

The first accommodation portion 22a is a hollow body and has a first accommodation chamber 30a therein. The second accommodation portion 22b is also a hollow body, and has a second accommodation chamber 30b therein. That is, the plurality of accommodation portions 22 respectively includes a plurality of accommodation chambers 30.

As illustrated in Fig. 9, the first accommodation portion 22a and the second accommodation portion 22b are accommodation regions for temporarily storing the platelet product M transferred to the first sampling container 90a and the second sampling container 90b. The volume of the first accommodation chamber 30a and the volume of the second accommodation chamber 30b are, for example, sufficient to accommodate about 8 mL to about 10 mL of the platelet product M. The volume of the first accommodation chamber 30a and the volume of the second accommodation chamber 30b are, for example, substantially equal to each other. The volume of the first accommodation chamber 30a and the volume of the second accommodation chamber 30b may be different from each other. In the initial state of the collection kit 10A, air exists in the first accommodation chamber 30a and the second accommodation chamber 30b.

Returning to Figs. 1 and 2, the collection member 14A further includes a first inflow tube portion 32a, a first outflow tube portion 34a, and a first exhaust tube portion 36a. The first inflow tube portion 32a and the first outflow tube portion 34a are individually connected to a lower portion of the first accommodation portion 22a. The first exhaust tube portion 36a is continuous with an upper portion of the first accommodation portion 22a. Each of the first inflow tube portion 32a, the first outflow tube portion 34a, and the first exhaust tube portion 36a has an inner hole (not illustrated). Each of the first inflow tube portion 32a, the first outflow tube portion 34a, and the first exhaust tube portion 36a communicates with the first accommodation chamber 30a via each inner hole.

The collection member 14A further includes a second inflow tube portion 32b, a second outflow tube portion 34b, and a second exhaust tube portion 36b. The second inflow tube portion 32b and the second outflow tube portion 34b are individually connected to a lower portion of the second accommodation portion 22b. The second exhaust tube portion 36b is continuous with an upper portion of the second accommodation portion 22b. Each of the second inflow tube portion 32b, the second outflow tube portion 34b, and the second exhaust tube portion 36b has an inner hole (not illustrated). Each of the second inflow tube portion 32b, the second outflow tube portion 34b, and the second exhaust tube portion 36b communicates with the second accommodation chamber 30b via each inner hole.

As understood from the above, the collection member 14A is a single member integrally including the tube protection portion 20, the first accommodation chamber 30a, the second accommodation chamber 30b, the first inflow tube portion 32a, the second inflow tube portion 32b, the first outflow tube portion 34a, the second outflow tube portion 34b, the first exhaust tube portion 36a, and the second exhaust tube portion 36b. The collection member 14A (collection kit 10A) includes the first outflow tube portion 34a and the second outflow tube portion 34b as a plurality of outflow tube portions 34.

The collection member 14A configured as described above is inflexible. Specifically, when the platelet product M is transferred from the medical bag 80 to the first accommodation chamber 30a, and when the platelet product M is transferred from the first accommodation chamber 30a toward the first sampling container 90a, the collection member 14A is rigid to an extent that it is not substantially deformed. The collection member 14A is rigid to an extent that it is not substantially deformed even when the platelet product M flows into or out of the second accommodation chamber 30b. The elastic modulus of the material of the collection member 14A is, for example, 20 kg/mm² or more, and thus it is difficult to crush the collection member 14A with a finger. As described above, the collection member 14A is made of a rigid material and exhibits sufficient strength at the time of use.

The collection member 14A is preferably transparent or semi-transparent. In this case, the operator may easily visually confirm the extent to which the platelet product M is accommodated in the first accommodation chamber 30a and the second accommodation chamber 30b. Furthermore, the operator may easily visually confirm the extent to which the platelet product M has flowed out from the first accommodation chamber 30a and the second accommodation chamber 30b.

Preferable examples of the material satisfying the above conditions include a resin. Since the resin is lightweight, difficult to break, and easy to process, it is suitable as the material of the collection member 14A. Typical examples of the resin include polycarbonate (PC), polypropylene (PP), polystyrene (PS), polyethylene terephthalate (PET), glycol-modified polyethylene terephthalate (PETG), and polyvinyl chloride (PVC). However, the material of the collection member 14A may be glass.

The collection member 14A further includes an exhaust portion 40 for discharging the air inside the first accommodation chamber 30a and the second accommodation chamber 30b to the outside of the collection member 14A. In the first embodiment, the exhaust portion 40 includes a first exhaust portion 40a provided at an upper portion of the first accommodation portion 22a and a second exhaust portion 40b provided at an upper portion of the second accommodation portion 22b.

The first exhaust portion 40a includes a first exhaust cylinder 42a provided at the first exhaust tube portion 36a. The first exhaust cylinder 42a includes a cylinder body 44, a lid portion 46, and a hydrophilic filter 48. The hydrophilic filter 48 is accommodated in the cylinder body 44.

The hydrophilic filter 48 allows passage of air before being wetted with the platelet product M that is a liquid, and suppresses the passage of the air after being wetted with the platelet product M. Therefore, since the platelet product M overflows from the plurality of accommodation chambers 30 and wets the hydrophilic filter 48, the atmosphere (air) is prevented from passing through the hydrophilic filter 48 and flowing into the plurality of accommodation chambers 30. That is, the hydrophilic filter 48 functions as a resistance against inflow of the atmosphere into each of the accommodation chambers 30.

The upper end of the cylinder body 44 of the first exhaust cylinder 42a is an open end having an opening 50. The opening 50 is closed by the lid portion 46. For example, the cylinder body 44 and the lid portion 46 are connected to each other via a hinge (not illustrated). Therefore, the lid portion 46 can rotate about the hinge. Alternatively, screw portions (not illustrated) may be respectively formed on the outer peripheral surface of the cylinder body 44 and the inner surface of the side peripheral portion of the lid portion 46. In this case, the screw portion of the cylinder body 44 and the screw portion of the lid portion 46 are screwed together, and thus the lid portion 46 is attached to the cylinder body 44. Accordingly, the lid portion 46 is closed, and the atmosphere is prevented from flowing into the cylinder body 44. On the other hand, as the screwing between the screw portion of the cylinder body 44 and the screw portion of the lid portion 46 is released, the lid portion 46 is opened, and the atmosphere can flow into the cylinder body 44.

The second exhaust portion 40b includes a second exhaust cylinder 42b provided at the second exhaust tube portion 36b. The second exhaust cylinder 42b is configured similarly to the first exhaust cylinder 42a. Therefore, the detailed description of the second exhaust cylinder 42b will be omitted. The first exhaust cylinder 42a and the second exhaust cylinder 42b constitute an exhaust cylinder 42.

The collection member 14A further includes an adapter 60. The number of the adapters 60 is the same as the number of the accommodation portions 22. Thus, in the illustrated example, the collection kit 10A includes two adapters 60. The two adapters 60 include a first adapter 60a and a second adapter 60b. Note that in a case where the collection member 14A includes three or more accommodation chambers 30, the collection kit 10A includes three or more adapters 60 corresponding to the respective accommodation chambers 30.

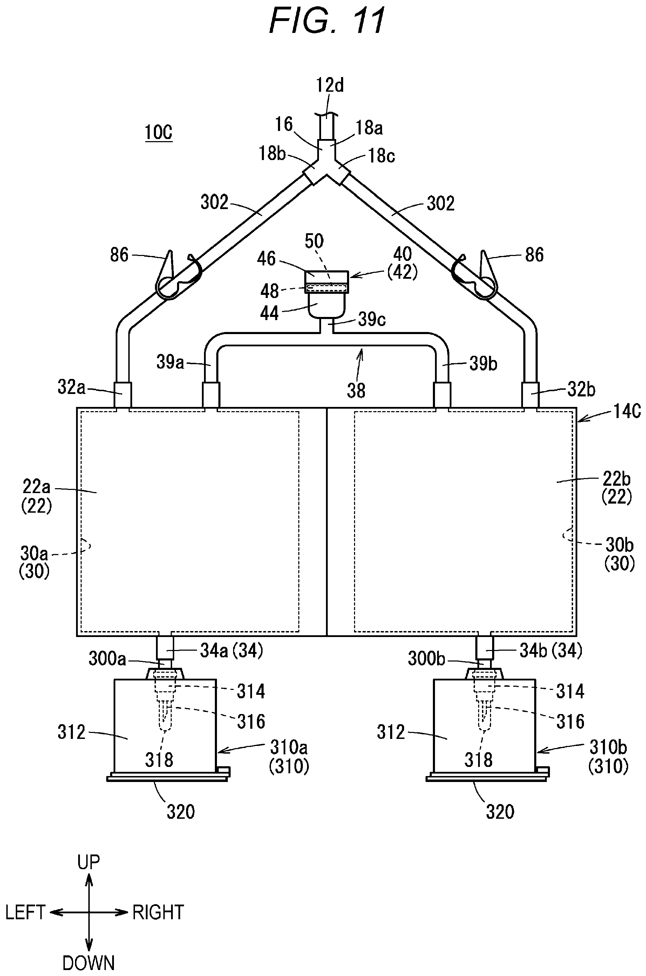

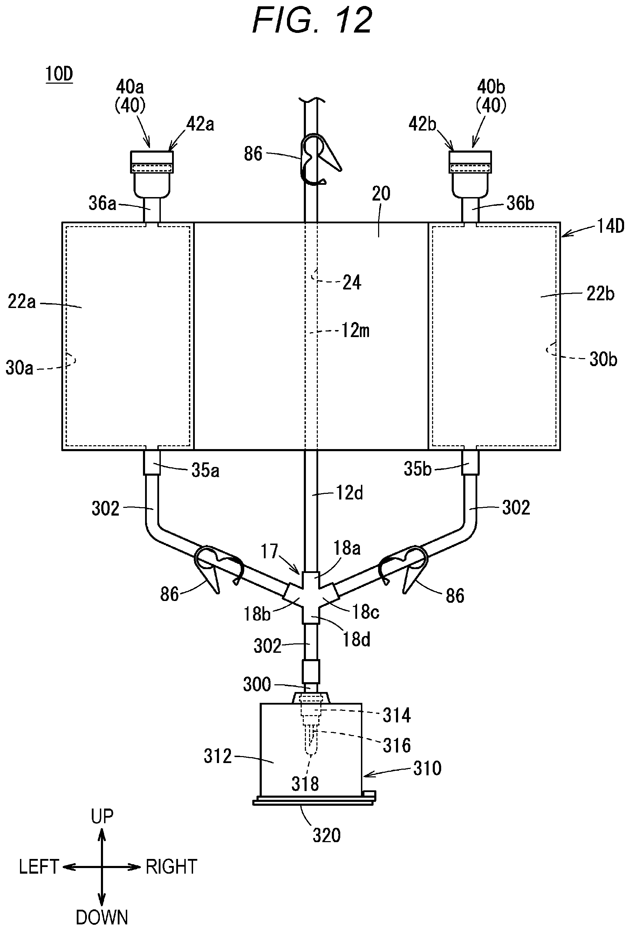

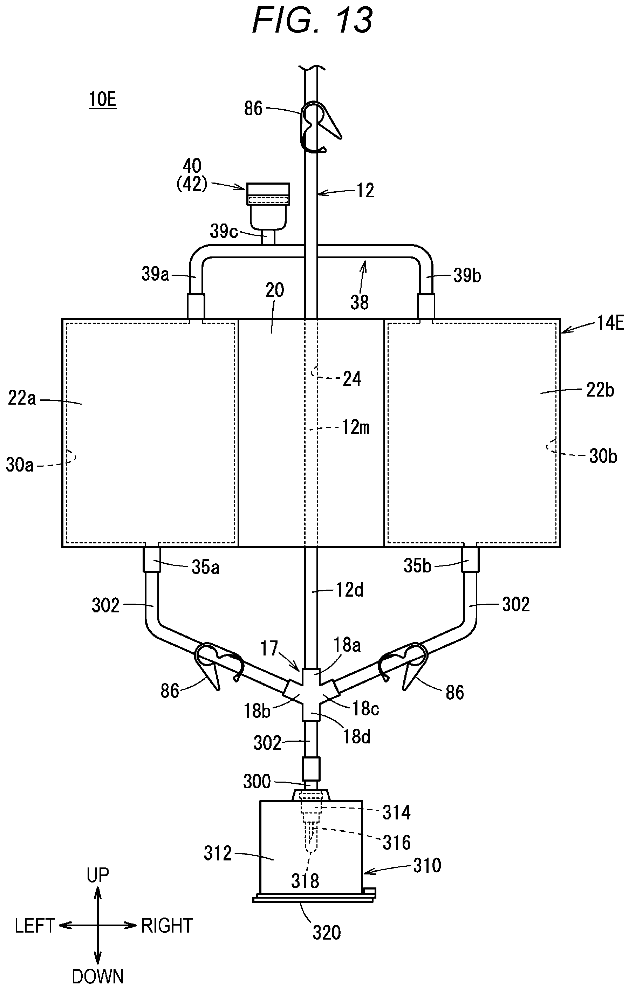

In the initial state of the collection kit 10A, the collection kit 10A may not be provided with the first adapter 60a and the second adapter 60b. For example, as in a second embodiment (see Fig. 10) and a third embodiment (see Fig. 11) to be described later, a first adapter 310a and a second adapter 310b may be connected to the first outflow tube portion 34a and the second outflow tube portion 34b via a first outflow port 300a and a second outflow port 300b. Alternatively, as in a fourth embodiment and a fifth embodiment (see Figs. 12 and 13) to be described later, an adapter 310 may be connected to the first outflow tube portion 34a and the second outflow tube portion 34b via a branch tube 17 and an outflow port 300.

As illustrated in Fig. 2, a needle unit 62 is provided inside the first adapter 60a. The needle unit 62 includes a needle hub 64 held by the first outflow tube portion 34a between the first accommodation portion 22a and the first adapter 60a, a cap member 66 connected to the needle hub 64, a tubular needle portion 68 held by the cap member 66, and a rubber cover 70 covering the needle portion 68. The lower opening of the first adapter 60a is closed by a release sheet 72.

The second adapter 60b is configured similarly to the first adapter 60a. Therefore, the detailed description of the second adapter 60b will be omitted.

### (2) Configuration of Collection Kit Jig

Next, with reference to Figs. 4 to 7, a collection kit jig 100 for dispensing the platelet product M from the collection kit 10A into the first sampling container 90a and the second sampling container 90b will be described.

Hereinafter, the direction along the thickness direction of the collection kit 10A, which is also the direction of viewing the collection kit jig 100 from two second support plates 106, is referred to as the front. The direction along the thickness direction of the collection kit 10A, which is also the direction of viewing two first support plates 104 from the collection kit jig 100, is referred to as the rear. That is, the two first support plates 104 are located in front of the two second support plates 106. Conversely, the two second support plates 106 are located behind the two first support plates 104. Furthermore, in each member, a surface facing the rear is referred to as a rear surface.

The collection kit jig 100 includes a plate-shaped base 102. Two first support plates 104 are provided upright on an upper surface of the base 102. The two first support plates 104 are disposed parallel to each other at the left end and the right end of the base 102.

The two second support plates 106 are provided upright on the upper surface of the base 102. The two second support plates 106 are disposed parallel to each other. The spacing between the two second support plates 106 is smaller than the spacing between the two first support plates 104.

The collection kit jig 100 includes a container holding portion 220, a kit holding portion 110, and a lifting mechanism 150. The container holding portion 220 will be described later.

The kit holding portion 110 includes a base portion 112, a first retainer 114a and a second retainer 114b, and a bracket 116. The base portion 112 is positioned and fixed to the front surfaces at the upper portions of the two first support plates 104. The first retainer 114a is positioned and fixed to the left portion at the front surface of the base portion 112, and the second retainer 114b is positioned and fixed to the right portion at the front surface of the base portion 112. The bracket 116 is positioned and fixed between the first retainer 114a and the second retainer 114b at the front surface of the base portion 112.

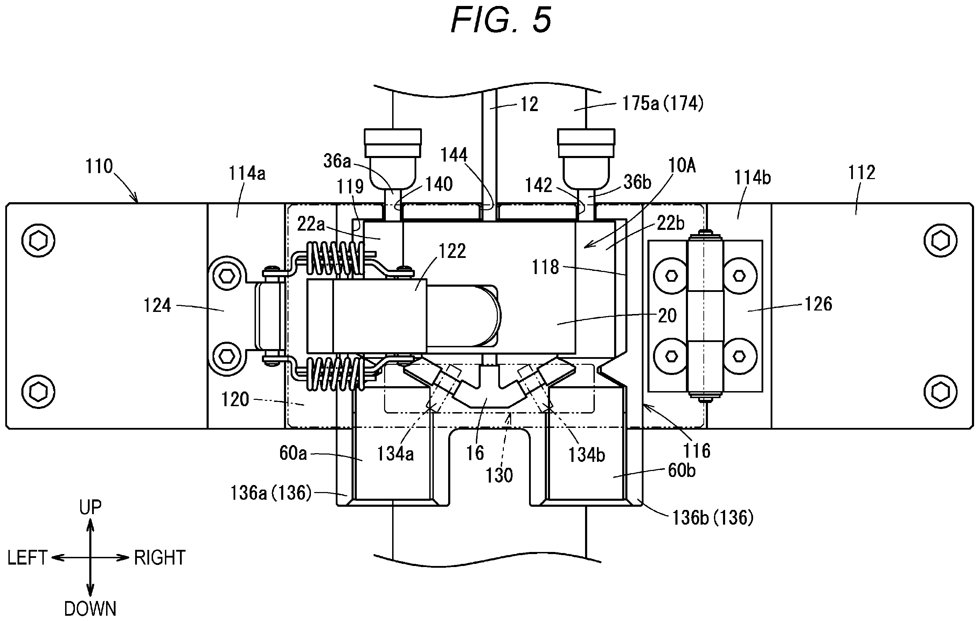

As illustrated in detail in Fig. 5, a cover 120 is provided on the front surfaces of the first retainer 114a and the second retainer 114b. A fastener 122 is attached to the front surface of the cover 120. A hook 124 for fastening the fastener 122 is provided at the left portion of the front surface of the first retainer 114a. The right portion of the front surface of the second retainer 114b and the cover 120 are connected to each other via a hinge 126. Fig. 4 illustrates a state where the cover 120 is closed and the fastener 122 is fastened to the hook 124. The cover 120 is preferably transparent or semi-transparent.

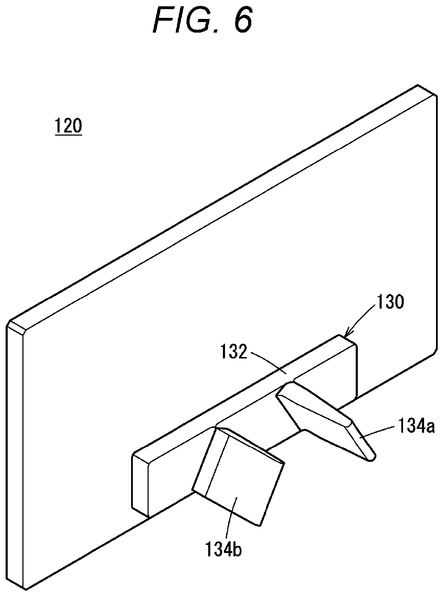

As illustrated in Fig. 6, the cover 120 has a clamp portion 130 on the rear surface. The clamp portion 130 includes a flat plate portion 132, and a first protrusion 134a and a second protrusion 134b. The first protrusion 134a and the second protrusion 134b protrude rearward from the rear surface of the flat plate portion 132. The first protrusion 134a and the second protrusion 134b are inclined so as to approach each other from the lower side toward the upper side.

As illustrated in Fig. 5, the front end of the bracket 116 has an open port 119. The collection kit 10A is inserted into an accommodation space 118, which is the inner chamber of the bracket 116, from the open port 119. The operator can view the collection kit 10A accommodated in the accommodation space 118 through the open port 119.

The lower portion of the bracket 116 has an adapter support portion 136. Since the number of the adapters 60 in the collection kit 10A is two, the bracket 116 includes a first adapter support portion 136a and a second adapter support portion 136b as the adapter support portion 136. The first adapter support portion 136a and the second adapter support portion 136b have a substantially cylindrical shape. The entire first adapter 60a is inserted into the first adapter support portion 136a. The entire second adapter 60b is inserted into the second adapter support portion 136b.

The upper portion of the bracket 116 includes a first slit 140, a second slit 142, and a third slit 144. The first exhaust tube portion 36a is inserted into the first slit 140. The upper portion of the first exhaust tube portion 36a is exposed above the bracket 116 from the first slit 140. The first exhaust cylinder 42a is attached to this upper portion. The second exhaust tube portion 36b is inserted into the second slit 142. The upper portion of the second exhaust tube portion 36b is exposed above the bracket 116 from the second slit 142. The second exhaust cylinder 42b is attached to this upper portion. The third slit 144 is located between the first slit 140 and the second slit 142. The midstream portion 12m of the inflow tube 12 is inserted into the third slit 144. When the collection kit 10A is accommodated in the accommodation space 118, the upstream end portion 12u of the inflow tube 12 is located above the third slit 144. As described above, the first exhaust tube portion 36a, the second exhaust tube portion 36b, and the inflow tube 12 are prevented from interfering with the bracket 116.

The lifting mechanism 150 includes a lifting operation portion 152, a first displacement portion 170, a first guide portion 200, a second displacement portion 210, a second guide portion 230, and a gear mechanism 250. As the lifting operation portion 152 is operated by the operator, the second displacement portion 210 including the container holding portion 220 moves in the up-down direction. Note that the container holding portion 220 is disposed below the kit holding portion 110.

The lifting operation portion 152 includes an operation lever 154 disposed on the front surface at the upper portion of two second support plates 106. A support shaft 158 that rotatably supports the operation lever 154 is supported by a guide bracket 160. The operation lever 154 is connected to a first movement plate 172 via two V-shaped arms 162, a connection rod 164, and a plate-attached nut 166.

The first displacement portion 170 includes the first movement plate 172 and a first drive plate 174. The first movement plate 172 and the first drive plate 174 integrally move upward and downward while being guided by the first guide portion 200. Hereinafter, the first movement plate 172, the first drive plate 174, and the first guide portion 200 will be described.

The first guide portion 200 includes two first guide rods 202 provided upright on the base 102. Each of the two first guide rods 202 passes through an insertion hole formed in each of the left end and the right end of the first movement plate 172. The upper portion of each of the two first guide rods 202 is exposed upward from a cylindrical portion 204b of a first flanged collar 204 provided on the upper surface of the first movement plate 172. A first stopper 206 is provided at the upper end of each of the two first guide rods 202. The upper surface of a large-diameter flange portion 204a of the first flanged collar 204 abuts the lower surface of the first movement plate 172.

Each of the first guide rods 202 is inserted into a first return spring 208. The lower end of the first return spring 208 abuts the upper surface of the cylindrical portion 204b of the first flanged collar 204. The upper end of the first return spring 208 abuts the lower surface of the first stopper 206. The first return spring 208 biases the first movement plate 172 downward via the first flanged collar 204.

The first drive plate 174 includes a first vertical portion 175a extending along the up-down direction and a first horizontal portion 175b extending along the front-rear direction. The first horizontal portion 175b is connected to the lower surface of the first movement plate 172. The first vertical portion 175a extends downward from the front end of the first horizontal portion 175b.

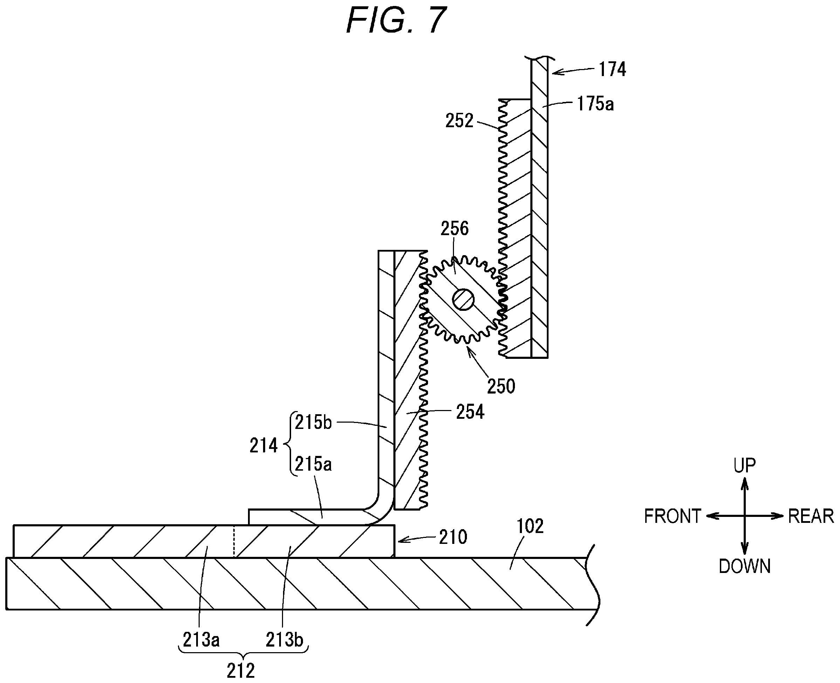

The second displacement portion 210 will be described. The second displacement portion 210 includes a second movement plate 212. As illustrated in Figs. 4 and 7, the second movement plate 212 includes a pedestal portion 213a extending along the width direction, and a tab portion 213b protruding rearward from a substantially center of the pedestal portion 213a in the width direction.

As illustrated in Fig. 4, the container holding portion 220 includes a first container holder 220a and a second container holder 220b provided on the upper surface of the pedestal portion 213a. The first container holder 220a and the second container holder 220b move upward and downward integrally with the second movement plate 212.

As illustrated in Fig. 7, a second drive plate 214 is provided on the upper surface of the tab portion 213b of the second movement plate 212. The second drive plate 214 includes a second horizontal portion 215a extending in the front-rear direction and a second vertical portion 215b extending in the up-down direction. The second horizontal portion 215a is connected to the tab portion 213b in a state where the lower surface of the second horizontal portion 215a abuts the upper surface of the tab portion 213b. Therefore, the second movement plate 212 moves upward and downward integrally with the second drive plate 214.

The second guide portion 230 includes two second guide rods 232 provided upright on the base 102. Each of the two second guide rods 232 passes through an insertion hole (not illustrated) formed at each of the left end and the right end of the pedestal portion 213a. The upper portion of each of the two second guide rods 232 is exposed upward from a second flanged collar 234. A second stopper 236 is provided at the upper end of each of the two second guide rods 232.

Each of the second guide rods 232 is inserted into a second return spring 238. The lower end of the second return spring 238 abuts the upper surface of the second flanged collar 234. The upper end of the second return spring 238 abuts the lower surface of the second stopper 236. The second return spring 238 biases the second movement plate 212 downward via the second flanged collar 234.

As illustrated in Fig. 7, the gear mechanism 250 includes a first rack 252, a second rack 254, and a pinion 256 that meshes with the first rack 252 and the second rack 254. The first rack 252 is disposed on the front surface at the lower portion of the first vertical portion 175a of the first drive plate 174. The second rack 254 is disposed on the rear surface at the second vertical portion 215b of the second drive plate 214. The pinion 256 is interposed between the first rack 252 and the second rack 254. Note that the pinion 256 is supported by an L-shaped stay 258 provided upright on the upper surface of the base 102 via a bearing 260.

### (3) Collection Method

Next, a collection method for dispensing the platelet product M into the first sampling container 90a and the second sampling container 90b using the collection kit jig 100 will be described.

First, as illustrated in Fig. 3, the operator connects the medical bag 80 accommodating the platelet product M to the inflow tube 12. Specifically, the medical bag 80 has a supply tube 82. The operator connects the supply tube 82 to the upstream end portion 12u of the inflow tube 12. At this time, the supply tube 82 is connected to the inflow tube 12 without coming into contact with outside air using an aseptic connection device.

Next, the operator moves the platelet product M to the first accommodation chamber 30a and the second accommodation chamber 30b. For this movement, the operator opens the lid portion 46 of each of the first exhaust cylinder 42a and the second exhaust cylinder 42b. In order to open the lid portion 46, for example, the screwing between the lid portion 46 and the cylinder body 44 is loosened. The lid portion 46 may be detached from the cylinder body 44. Note that before the medical bag 80 is connected to the inflow tube 12, the lid portion 46 may be opened.

The operator disposes the medical bag 80 above the collection member 14A. The platelet product M flows out of the medical bag 80 by gravity and flows into the main connection portion 18a of the branch tube 16 via the supply tube 82 and the inflow tube 12. The first sub-connection portion 18b and the second sub-connection portion 18c branch from the main connection portion 18a. Therefore, the platelet product M is divided into a first branch stream that moves from the main connection portion 18a to the first inflow tube portion 32a via the first sub-connection portion 18b, and a second branch stream that moves from the main connection portion 18a to the second inflow tube portion 32b via the second sub-connection portion 18c.

The first branch stream passes through the first inflow tube portion 32a and flows into the first accommodation chamber 30a. Therefore, the air stored in the first accommodation chamber 30a is pushed out by the first branch stream, and is exhausted to the atmosphere from the first exhaust cylinder 42a through the first exhaust tube portion 36a. Similarly, when the second branch stream passes through the second inflow tube portion 32b and flows into the second accommodation chamber 30b, the air stored in the second accommodation chamber 30b is exhausted to the atmosphere from the second exhaust cylinder 42b through the second exhaust tube portion 36b.

When the platelet product M further flows into the first accommodation chamber 30a and the second accommodation chamber 30b, the excess platelet product M comes into contact with the hydrophilic filter 48 of each of the first exhaust cylinder 42a and the second exhaust cylinder 42b. Thus, the excess platelet product M is captured in the pores of the hydrophilic filter 48. As a result, the platelet product M is held by the hydrophilic filter 48, and the hydrophilic filter 48 is closed. Accordingly, the platelet product M is prevented from passing through the hydrophilic filter 48 and flowing out from the first exhaust cylinder 42a and the second exhaust cylinder 42b. Therefore, the required amount of the platelet product M is accommodated in the first accommodation chamber 30a and the second accommodation chamber 30b. The required amount is, for example, about 8 mL to 10 mL.

Thereafter, the operator rotates the lid portion 46 of each of the first exhaust cylinder 42a and the second exhaust cylinder 42b to close the lid portion 46. Next, the operator separates the medical bag 80 from the inflow tube 12 by a tube sealer (high-frequency sealer or ultrasonic sealer) or the like. The tube sealer separates the inflow tube 12 from the supply tube 82 of the medical bag 80, and at the same time, seals the upstream end portion 12u of the inflow tube 12 by welding. The inflow tube 12 and the supply tube 82 are separated from each other without exposing internal flow paths to the outside air.

The medical bag 80 separated from the inflow tube 12 is stored until a culture test is completed, and then used. On the other hand, the collection kit 10A accommodating the platelet product M in the first accommodation chamber 30a and the second accommodation chamber 30b is carried into a clean bench. The collection kit jig 100 illustrated in Fig. 4 is installed in the clean bench.

The operator inserts the collection kit 10A into the accommodation space 118 through the open port 119 at the front end of the bracket 116. In this insertion, the operator inserts the first exhaust tube portion 36a, the second exhaust tube portion 36b, and the midstream portion 12m of the inflow tube 12 into the first slit 140, the second slit 142, and the third slit 144, respectively. The first exhaust cylinder 42a and the second exhaust cylinder 42b may be attached in advance to the first exhaust tube portion 36a and the second exhaust tube portion 36b before the collection kit 10A is inserted into the accommodation space 118. Alternatively, the first exhaust cylinder 42a and the second exhaust cylinder 42b may be attached to the first exhaust tube portion 36a and the second exhaust tube portion 36b after the collection kit 10A is inserted into the accommodation space 118.

The operator closes the cover 120 and engages the fastener 122 with the hook 124. When the cover 120 is closed, the first protrusion 134a crushes a relay tube 302 or the first sub-connection portion 18b of the branch tube 16, and blocks communication between the inflow tube 12 and the first inflow tube portion 32a. At the same time, the second protrusion 134b crushes the relay tube 302 or the second sub-connection portion 18c of the branch tube 16, and blocks communication between the inflow tube 12 and the second inflow tube portion 32b.

Note that a welding seal portion may be formed in each of the first sub-connection portion 18b and the second sub-connection portion 18c, and thus communication between the inflow tube 12 and each of the first inflow tube portion 32a and the second inflow tube portion 32b may be blocked. The welding seal portion is formed, for example, by welding the inner peripheral surface of each of the first sub-connection portion 18b and the second sub-connection portion 18c with an ultrasonic sealer, a high-frequency sealer, or the like. Alternatively, each of the first sub-connection portion 18b and the second sub-connection portion 18c may be crushed with a clamp 86 or the like illustrated in Fig. 10. When this configuration is adopted, the cover 120 may not include the clamp portion 130 (see Fig. 6).

In any case, the first accommodation chamber 30a and the second accommodation chamber 30b are independent inner chambers. Therefore, based on the first branch stream, the platelet product M stored in the first accommodation chamber 30a does not flow into the second inflow tube portion 32b or the second accommodation chamber 30b. Similarly, based on the second branch stream, the platelet product M stored in the second accommodation chamber 30b does not flow into the first inflow tube portion 32a or the first accommodation chamber 30a. That is, the movement of the platelet product M between the first accommodation chamber 30a and the second accommodation chamber 30b is prevented.

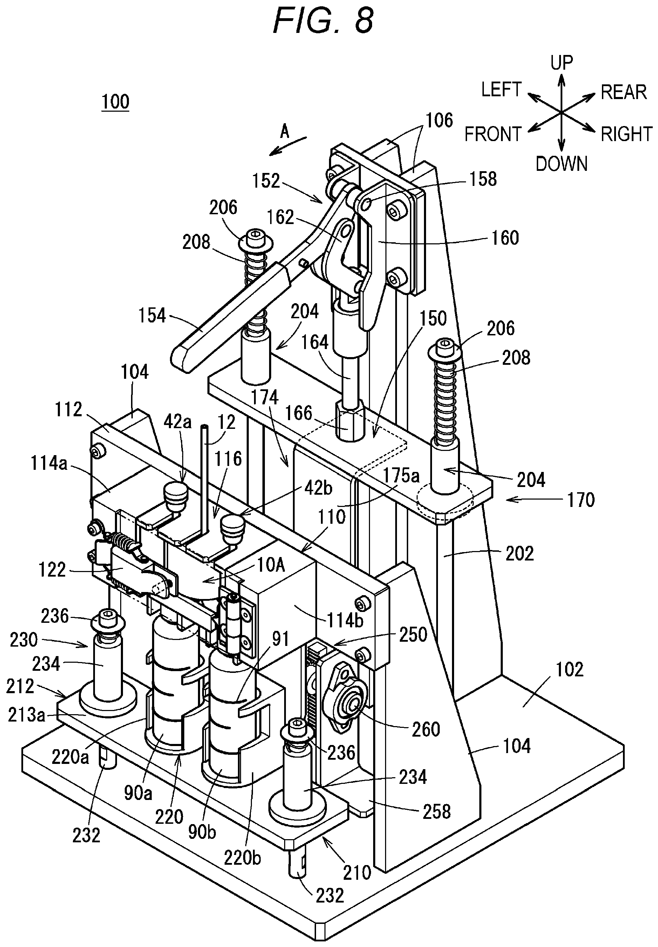

In order to transfer the platelet product M from the collection kit 10A to the first sampling container 90a and the second sampling container 90b, after peeling off the release sheets 72 from the first adapter 60a and the second adapter 60b, the operator grips one end of the operation lever 154 illustrated in Fig. 4 and rotates the operation lever 154 such that the one end thereof moves downward in a direction of an arrow A in Fig. 4. Thus, as illustrated in Fig. 8, the connection rod 164 moves downward.

As described above, the connection rod 164 is connected to the first movement plate 172 via the plate-attached nut 166, and the first drive plate 174 is connected to the first movement plate 172. Therefore, as illustrated in Fig. 8, as the connection rod 164 moves downward, the first movement plate 172 and the first drive plate 174 integrally move downward.

As illustrated in Fig. 7, the first rack 252 provided in the first vertical portion 175a of the first drive plate 174 meshes with the pinion 256, and the pinion 256 meshes with the second rack 254 provided in the second vertical portion 215b of the second drive plate 214. Therefore, when the first movement plate 172 and the first drive plate 174 move downward, the pinion 256 is pushed downward by the first rack 252 and rotates. As a result, the second rack 254 is pushed upward by the pinion 256. Thus, the second drive plate 214 and the second movement plate 212 to which the second drive plate 214 is connected integrally move up.

When the second movement plate 212 moves up, the second return spring 238 disposed between the second flanged collar 234 and the second stopper 236 is compressed in an axial direction. That is, the second movement plate 212 moves upward against the elastic force of the second return spring 238.

The container holding portion 220 moves upward integrally with the second movement plate 212. As a result, the first sampling container 90a is connected to the first adapter 60a, and the second sampling container 90b is connected to the second adapter 60b. The needle portion 68 of the first adapter 60a penetrates a sealing member 93 (see Figs. 4 and 9) of the first sampling container 90a, and the needle portion 68 of the second adapter 60b penetrates the sealing member 93 of the second sampling container 90b. The rubber cover 70 is pushed by the sealing member 93 and contracts so as to move toward the cap member 66.

In this state, the operator rotates the lid portion 46 of each of the first exhaust cylinder 42a and the second exhaust cylinder 42b to open the lid portion 46. In order to open the lid portion 46, the operator may remove the lid portion 46 from the cylinder body 44 by loosening the screwing between the lid portion 46 and the cylinder body 44.

As the lid portion 46 is opened, the atmosphere (air) flows into the cylinder body 44. A part of the atmosphere flows into the first accommodation chamber 30a and the second accommodation chamber 30b through the first exhaust tube portion 36a and the second exhaust tube portion 36b, respectively, while being subjected to resistance of the hydrophilic filter 48. However, the inflow amount of the atmosphere into the first accommodation chamber 30a and the second accommodation chamber 30b is suppressed by the resistance of the hydrophilic filter 48.

Pressure is applied to the platelet product M accommodated in each of the first accommodation chamber 30a and the second accommodation chamber 30b by the atmosphere. In the first accommodation chamber 30a, the pressure acts from the first exhaust tube portion 36a located above toward the first outflow tube portion 34a located below. Furthermore, the first sampling container 90a has a negative pressure. Therefore, the platelet product M in the first accommodation chamber 30a moves toward the first sampling container 90a via the first outflow tube portion 34a. As a result, as illustrated in Fig. 9, a first sample MS1 is collected in the first sampling container 90a.

The operator can confirm the inflow amount of the first sample MS1 by visually observing a scale 91 provided in the first sampling container 90a. When the inflow amount of the first sample MS1 reaches a predetermined amount, the operator closes the lid portion 46 of the first exhaust cylinder 42a. Thus, the movement of the platelet product M from the first accommodation chamber 30a to the first sampling container 90a is completed.

The platelet product M in the second accommodation chamber 30b is similarly transferred to the second sampling container 90b. As a result, a second sample MS2 is collected in the second sampling container 90b. Note that the collection of the second sample MS2 may be performed before or after the collection of the first sample MS1, or may be performed simultaneously with the collection of the first sample MS1.

Next, the operator rotates the operation lever 154 so as to return it to the position illustrated in Fig. 4. Thus, the second return spring 238 extends by elasticity. Accordingly, the second movement plate 212 is biased downward by the second return spring 238 via the second flanged collar 234. As a result, the second movement plate 212 and the container holding portion 220 integrally move downward. As the container holding portion 220 moves downward, the first sampling container 90a is removed from the first adapter 60a, and the second sampling container 90b is removed from the second adapter 60b. Through the above processes, the collection (sampling) of the platelet product M using the collection kit 10A is completed.

Following the downward movement of the second movement plate 212, contrary to the above, the second rack 254 pushes the pinion 256 upward, and the pinion 256 pushes the first rack 252 upward. As a result, the first drive plate 174 and the first movement plate 172 move upward and return to the position illustrated in Fig. 4.

Next, a culture test is performed on the first sample MS1 and the second sample MS2. Specifically, the first sample MS1 in the first sampling container 90a is used, for example, for anaerobic culture, and whether or not anaerobic bacteria growth is observed. The second sample MS2 in the second sampling container 90b is used, for example, for aerobic culture, and whether or not aerobic bacteria growth is observed. In both tests, the first sampling container 90a and the second sampling container 90b are used as culture bottles. In a case where the first sample MS1 and the second sample MS2 pass the culture test, the platelet product M in the medical bag 80 from which the first sample MS1 and the second sample MS2 are collected is determined to be a passed product. The passed product is used for patient treatment (blood transfusion and the like).

The collection kit jig 100 in the illustrated example includes a lifting mechanism 150 that moves the container holding portion 220 upward and downward. Alternatively, the collection kit jig 100 may include a lifting mechanism that moves the kit holding portion 110 upward and downward. In this configuration, the container holding portion 220 may be positioned and fixed to the base 102.

The collection kit 10A according to the first embodiment has the following effects.

A collection kit 10A for collecting a collection target (platelet product M) accommodated in the medical bag 80 illustrated in Fig. 3 into a plurality of sampling containers 90 (the first sampling container 90a and the second sampling container 90b) includes the inflow tube 12 and the collection member 14A. The medical bag 80 is connected to the inflow tube 12. The collection member 14A is connected to a downstream side of the inflow tube 12.

The collection member 14A includes a plurality of accommodation portions 22 and a plurality of accommodation chambers 30 respectively formed inside the plurality of accommodation portions 22 and accommodating the platelet product M. The collection kit 10A includes a plurality of outflow tube portions 34 and at least one exhaust portion 40.

The plurality of outflow tube portions 34 are connected to the plurality of accommodation chambers 30, and transfer the platelet product M from the plurality of accommodation portions 22 to the plurality of sampling containers 90. The at least one exhaust portion 40 discharges the air inside the plurality of accommodation chambers 30 to the outside of the collection member 14A.

In the above configuration, the collection member 14A is made of an inflexible material. Therefore, when the platelet product M flows into each of the accommodation chambers 30 and when the platelet product M flows out from each of the accommodation chambers 30 to the sampling container 90, the collection member 14A is not substantially deformed. That is, the collection member 14A has a property of maintaining its initial shape (shape-retaining property). Therefore, each of the accommodation portions 22 also has the shape-retaining property.

Therefore, when the platelet product M flows into each of the accommodation chambers 30, deformation of each of the accommodation portions 22 is suppressed. Therefore, the amount of the platelet product M transferred from the medical bag 80 to each of the accommodation chambers 30 is substantially the same. That is, the accommodation amount of the platelet product M in each of the accommodation chambers 30 is made constant. Therefore, the sampling amount of the platelet product M collected in each sampling container 90 is stabilized.

The collection member 14A includes a plurality of inflow tube portions 32 provided in each of the plurality of accommodation portions 22 and connected to each of the plurality of accommodation chambers 30. The inflow tube 12 is connected to the inflow tube portions 32 via the branch tube 16 (or the branch tube 17) connected to the downstream end portion 12d of the inflow tube 12.

According to this configuration, the platelet product M can be simultaneously dispensed to the plurality of accommodation chambers 30. Therefore, the sampling amount of the platelet product M collected in the sampling container 90 is further stabilized.

The inflow tube portion 32 is a part of the collection member 14A and thus exhibits inflexibility. Therefore, it is easy to connect the branch tube 16 (or the branch tube 17) to the inflow tube portion 32.

The collection member 14A includes a tube protection portion 20 that covers the inflow tube 12.

Since the inflow tube 12 is surrounded by the tube protection portion 20, the inflow tube 12 is prevented from being erroneously crushed. As a result, the inflow tube 12 is prevented from being occluded due to crushing. Therefore, it is easy to transfer the platelet product M from the medical bag 80 to each accommodation chamber.

The tube protection portion 20 is integrally continuous with the plurality of accommodation portions 22.

In this case, it is possible to manufacture the collection member 14A, in which the tube protection portion 20 and the plurality of accommodation portions 22 are integrally formed. Therefore, it is possible to efficiently configure the collection member 14A as compared with the case where the tube protection portion 20 and the plurality of accommodation portions 22 are individually manufactured and then the plurality of accommodation portions 22 are connected to the tube protection portion 20.

The material of the collection member 14A is resin. Note that, typical examples of the resin include polycarbonate (PC), polypropylene (PP), polystyrene (PS), polyethylene terephthalate (PET), glycol-modified polyethylene terephthalate (PETG), and polyvinyl chloride (PVC).

Since the resin is lightweight, the weight of the collection kit 10A can be reduced. Moreover, since the resin is rigid, it is easy to configure the collection member 14A having inflexibility.

The resin is transparent or semi-transparent.

According to this configuration, the accommodation amount of the platelet product M in the plurality of accommodation portions 22 (accommodation chambers 30) can be easily confirmed.

The exhaust portion 40 includes the exhaust cylinder 42. The exhaust cylinder 42 includes the cylinder body 44 having an opening 50, and the lid portion 46 that can open and close the opening 50 of the cylinder body 44.

When the platelet product M is transferred from the medical bag 80 to each of the accommodation chambers 30, the air in each of the accommodation chambers 30 can be exhausted to the outside of the collection member 14A through the opening 50 by opening the lid portion 46. After the transfer of the platelet product M from the medical bag 80 to each of the accommodation chambers 30 is completed, a state where the platelet product M is accommodated in each of the accommodation chambers 30 can be maintained by closing the lid portion 46.

The exhaust cylinder 42 includes the hydrophilic filter 48.

The hydrophilic filter 48 allows passage of air before being wetted with the platelet product M that is a liquid, and suppresses the passage of the air after being wetted with the platelet product M. Accordingly, even in a case where the lid portion 46 is opened and the atmosphere (air) is introduced through the opening 50 after the platelet product M overflows from each of the accommodation chambers 30 and wets the hydrophilic filter 48, the inflow of the air into each of the accommodation chambers 30 is suppressed. Therefore, the platelet product M transferred to the sampling container 90 can be used as a sample of the anaerobic culture test.

The collection kit 10A includes the adapter 60 connected to the downstream side of the outflow tube portion 34 and connectable to the plurality of sampling containers 90. In the illustrated example, the number of the adapters 60 is two (a plurality), but the number of the adapters 60 may be one. In other words, the collection kit 10A includes at least one adapter 60.

The adapter 60 allows the accommodation portions 22 and the sampling container 90 to be easily connected to each other via the outflow tube portions 34. Furthermore, since the collection kit 10A before use includes the adapter 60, the collection kit 10A allows the operator to eliminate the need to connect the adapter 60 to the outflow tube portion 34 one by one. As a result, the collection operation can be efficiently performed.

### (4) Another Embodiment

Next, the collection kits 10B to 10G according to the second embodiment to the seventh embodiment will be described with reference to Figs. 10 to 15. Note that the same components as those illustrated in Figs. 1 to 9 are denoted by the same reference signs, and the detailed description thereof will be omitted. In the second to seventh embodiments, the reference signs of the collection members are different from each other, but the materials of all the collection members are inflexible as in the first embodiment.

Fig. 10 is a schematic front view of the collection kit 10B according to the second embodiment. The collection kit 10B includes a collection member 14B. The collection member 14B includes the first accommodation portion 22a and the second accommodation portion 22b. The inner chamber of the first accommodation portion 22a is the first accommodation chamber 30a, and the inner chamber of the second accommodation portion 22b is the second accommodation chamber 30b. The collection member 14B further includes the first inflow tube portion 32a and the second inflow tube portion 32b, the first outflow tube portion 34a and the second outflow tube portion 34b, and the first exhaust tube portion 36a and the second exhaust tube portion 36b.

The first inflow tube portion 32a is located on a right side close to the second accommodation portion 22b on the upper portion of the first accommodation portion 22a. The first exhaust tube portion 36a is located on the left side spaced apart from the second accommodation portion 22b on the upper portion of the first accommodation portion 22a. The first exhaust tube portion 36a constitutes the first exhaust portion 40a together with the first exhaust cylinder 42a. The first outflow tube portion 34a is provided at the lower portion of the first accommodation portion 22a.

The second inflow tube portion 32b is located on the left side close to the first accommodation portion 22a on the upper portion of the second accommodation portion 22b. The second exhaust tube portion 36b is located on the right side spaced apart from the first accommodation portion 22a on the upper portion of the second accommodation portion 22b. The second exhaust tube portion 36b constitutes the second exhaust portion 40b together with the second exhaust cylinder 42b. The second outflow tube portion 34b is provided at the lower portion of the second accommodation portion 22b.

The downstream end portion 12d of the inflow tube 12 is connected to the main connection portion 18a of the branch tube 16. The first inflow tube portion 32a and the second inflow tube portion 32b are respectively connected to the first sub-connection portion 18b and the second sub-connection portion 18c of the branch tube 16 via the relay tube 302. In this manner, the inflow tube 12 is connected to the first inflow tube portion 32a and the second inflow tube portion 32b via the branch tube 16 above the first accommodation portion 22a and the second accommodation portion 22b.

The first outflow port 300a is connected to the first outflow tube portion 34a, and the second outflow port 300b is connected to the second outflow tube portion 34b. Here, the first outflow port 300a includes a breakable plug (not illustrated) therein. In the initial state, the plug seals the first outflow port 300a. When the platelet product M is transferred from the first accommodation chamber 30a to the first sampling container 90a, the plug is broken by being bent. Thus, the first outflow port 300a is opened. Similarly, the second outflow port 300b is opened as an internal plug (not illustrated) is broken.

The first adapter 310a is connected to the first outflow tube portion 34a via the first outflow port 300a. The first adapter 310a includes an accommodation cylinder 312 capable of accommodating a neck portion of the first sampling container 90a, a communication tube portion 314 provided at an upper end portion of the accommodation cylinder 312, a tubular needle portion 316 disposed inside the accommodation cylinder 312, and a rubber cover 318 covering the needle portion 316. The accommodation cylinder 312 includes a lid 320 that can be opened and closed. The release sheet 72 (see Figs. 1 and 2) may be adopted instead of the lid 320.

The needle portion 316 in the accommodation cylinder 312 is connected to the communication tube portion 314. When the neck portion of the first sampling container 90a (see Fig. 9) is inserted into the accommodation cylinder 312, the needle portion 316 penetrates the sealing member 93 of the first sampling container 90a. Therefore, when the plug is broken and the first outflow port 300a is opened, the first sampling container 90a and the first accommodation chamber 30a communicate with each other via the communication tube portion 314 and the needle portion 316.

When the needle portion 316 punctures the sealing member 93 of the first sampling container 90a, the rubber cover 318 is compressed by being pushed toward the collection member 14A. The needle portion 316 penetrates the compressed rubber cover 318. When the needle portion 316 is removed from the sealing member 93 of the first sampling container 90a, the rubber cover 318 expands by an elastic restoring force to cover the needle portion 316 again.

The second adapter 310b has the same configuration as that of the first adapter 310a. When the needle portion 316 of the second adapter 310b penetrates the sealing member 93 of the second sampling container 90b and the plug is broken to open the second outflow port 300b, the second sampling container 90b and the second accommodation chamber 30b communicate with each other.

In the initial state of the collection kit 10B, the collection kit 10B may not be provided with the first adapter 310a and the second adapter 310b. In this case, when the collection kit 10B is used, the first adapter 310a and the second adapter 310b are connected to the collection kit 10B.

In this configuration, the first protrusion 134a and the second protrusion 134b (see Fig. 6) abut the first sub-connection portion 18b and the second sub-connection portion 18c, respectively. Alternatively, as illustrated in Fig. 10, the clamps 86 may be attached to the first sub-connection portion 18b and the second sub-connection portion 18c. In this state, the platelet product M is transferred from the first accommodation chamber 30a and the second accommodation chamber 30b to the first sampling container 90a and the second sampling container 90b, respectively, similarly to the first embodiment.

Fig. 11 is a schematic front view of a collection kit 10C according to the third embodiment. The collection kit 10C includes a collection member 14C. The collection member 14C includes the first accommodation portion 22a and the second accommodation portion 22b. The collection member 14C further includes the first inflow tube portion 32a and the second inflow tube portion 32b, the first outflow tube portion 34a and the second outflow tube portion 34b, and a collective exhaust tube portion 38. That is, the collection kit 10C includes one exhaust portion 40. In addition, the collection kit 10C can connect two adapters 310 (the first adapter 310a and the second adapter 310b) that are separate from the collection kit 10C.

The first inflow tube portion 32a is located on the left side spaced apart from the second accommodation portion 22b on the upper portion of the first accommodation portion 22a. The second inflow tube portion 32b is located on the right side spaced apart from the first accommodation portion 22a on the upper portion of the second accommodation portion 22b. Similarly to the second embodiment, the downstream end portion 12d of the inflow tube 12 is connected to the first accommodation chamber 30a and the second accommodation chamber 30b via the branch tube 16.

The collective exhaust tube portion 38 includes a first branch portion 39a provided in the first accommodation portion 22a, a second branch portion 39b provided in the second accommodation portion 22b, and a junction 39c where the first branch portion 39a and the second branch portion 39b merge. The first branch portion 39a is located on the right side close to the second accommodation portion 22b on the upper portion of the first accommodation portion 22a. The second branch portion 39b is located on the left side close to the first accommodation portion 22a on the upper portion of the second accommodation portion 22b. The exhaust cylinder 42 is provided at the junction 39c. The first outflow tube portion 34a is provided at the lower portion of the first accommodation portion 22a.

The first outflow tube portion 34a is provided at the lower portion of the first accommodation portion 22a. The first adapter 310a is connected to the first outflow tube portion 34a via the first outflow port 300a. The second outflow tube portion 34b is provided at the lower portion of the second accommodation portion 22b. The second adapter 310b is connected to the second outflow tube portion 34b via the second outflow port 300b.

In this configuration, when the platelet product M flows into the first accommodation chamber 30a and the second accommodation chamber 30b, the air in the first accommodation chamber 30a flows through the first branch portion 39a and the junction 39c, and then is exhausted to the atmosphere via the exhaust cylinder 42. The air in the second accommodation chamber 30b flows through the second branch portion 39b and the junction 39c, and then is exhausted to the atmosphere via the exhaust cylinder 42.

Thereafter, similarly to the second embodiment, the platelet product M is transferred to the first sampling container 90a attached to the first adapter 310a, and the platelet product M is transferred to the second sampling container 90b attached to the second adapter 310b.

Fig. 12 is a schematic front view of a collection kit 10D according to the fourth embodiment. The collection kit 10D includes a collection member 14D. The collection member 14D includes the first accommodation portion 22a, the second accommodation portion 22b, and the tube protection portion 20. The inner chamber of the first accommodation portion 22a is the first accommodation chamber 30a, and the inner chamber of the second accommodation portion 22b is the second accommodation chamber 30b. The collection member 14D includes a first inlet/outlet tube portion 35a serving as both the first inflow tube portion 32a and the first outflow tube portion 34a, and a second inlet/outlet tube portion 35b serving as both the second inflow tube portion 32b and the second outflow tube portion 34b. The collection member 14D further includes the first exhaust tube portion 36a and the second exhaust tube portion 36b.

The midstream portion 12m of the inflow tube 12 is inserted into the tube protection portion 20. The branch tube 17 is provided at the downstream end portion 12d of the inflow tube 12. The branch tube 17 includes the main connection portion 18a, the first sub-connection portion 18b, the second sub-connection portion 18c, and an adapter connection portion 18d. The downstream end portion 12d is connected to the main connection portion 18a. The first inlet/outlet tube portion 35a and the second inlet/outlet tube portion 35b are connected to the first sub-connection portion 18b and the second sub-connection portion 18c, respectively. One adapter 310 is connected to the adapter connection portion 18d via the outflow port 300. That is, one adapter 310 that is separate from the collection member 14D can be connected to the collection kit 10D.

In this configuration, the platelet product M flows into the first accommodation chamber 30a and the second accommodation chamber 30b via the first inlet/outlet tube portion 35a and the second inlet/outlet tube portion 35b. Thereafter, when the platelet product M is transferred from the first accommodation chamber 30a to a sampling container (not illustrated) attached to the adapter 310, the operator, for example, clamps the upstream end portion 12u of the inflow tube 12 and the second sub-connection portion 18c with the clamps 86. Therefore, only the platelet product M in the first accommodation chamber 30a flows into the sampling container via the first inlet/outlet tube portion 35a, the first sub-connection portion 18b, and the outflow port 300.

After the predetermined amount of the platelet product M is transferred to the sampling container, the operator removes the sampling container from the adapter 310. Next, the operator attaches another sampling container (not illustrated) to the adapter 310. On the other hand, the operator clamps, for example, the first sub-connection portion 18b with the clamp 86. The clamp 86 attached to the second sub-connection portion 18c may be removed, or may remain attached. In any case, only the platelet product M in the second accommodation chamber 30b flows into the sampling container via the second inlet/outlet tube portion 35b, the second sub-connection portion 18c, and the outflow port 300. In a case where the collection kit 10D further includes the accommodation chambers 30 in addition to the first accommodation chamber 30a and the second accommodation chamber 30b, the above operation is repeated. As described above, the platelet product M can be dispensed into a plurality of sampling containers.

Fig. 13 is a schematic front view of a collection kit 10E according to the fifth embodiment. The collection kit 10E includes a collection member 14E. The collection member 14E includes the first accommodation portion 22a, the second accommodation portion 22b, and the tube protection portion 20. The collection member 14E further includes the first inlet/outlet tube portion 35a, the second inlet/outlet tube portion 35b, and the collective exhaust tube portion 38. The branch tube 17 is provided at the downstream end portion 12d of the inflow tube 12. That is, the collection kit 10E includes one exhaust portion 40. In addition, the collection kit 10E can connect one adapter 310 that is separate from the collection member 14E.

Similarly to the fourth embodiment, in this configuration, the platelet product M flows into the first accommodation chamber 30a and the second accommodation chamber 30b via the first inlet/outlet tube portion 35a and the second inlet/outlet tube portion 35b. In this inflow, the air in the first accommodation chamber 30a flows through the first branch portion 39a and the junction 39c, and then is exhausted to the atmosphere via the exhaust cylinder 42. The air in the second accommodation chamber 30b flows through the second branch portion 39b and the junction 39c, and then is exhausted to the atmosphere via the exhaust cylinder 42.

Thereafter, similarly to the fourth embodiment, the platelet product M accommodated in each of the first accommodation chamber 30a and the second accommodation chamber 30b is transferred to a sampling container (not illustrated).

In the collection kit 10D (see Fig. 12) and the collection kit 10E (see Fig. 13), the first inlet/outlet tube portion 35a serves as both the first inflow tube portion 32a and the first outflow tube portion 34a, and the second inlet/outlet tube portion 35b serves as both the second inflow tube portion 32b and the second outflow tube portion 34b. Therefore, the configurations of the collection members 14D and 14E and the collection kits 10D and 10E can be simplified.

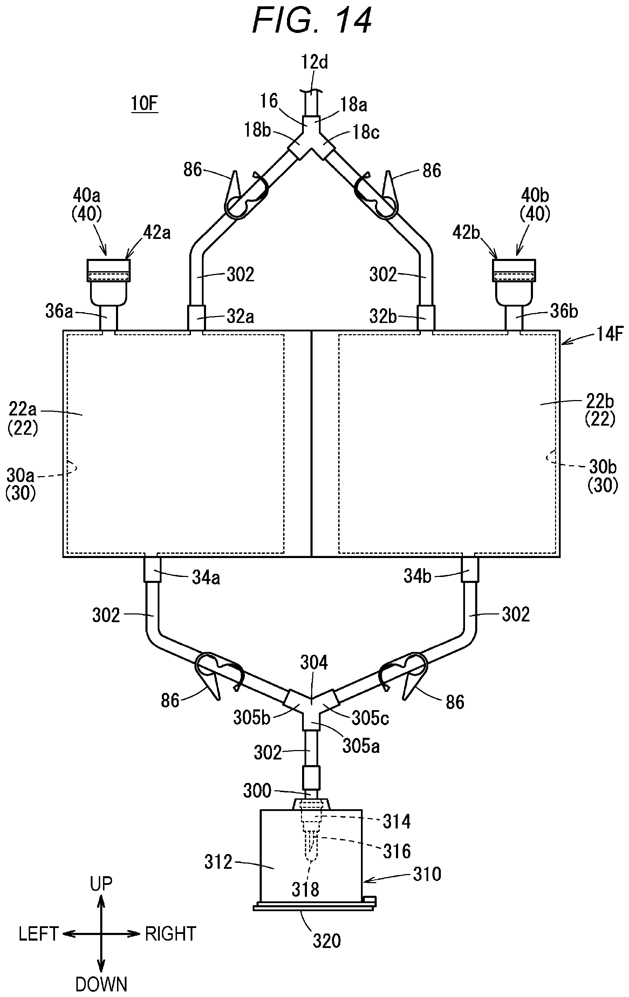

Fig. 14 is a schematic front view of a collection kit 10F according to the sixth embodiment. The collection kit 10F includes a collection member 14F. The collection member 14F includes the first accommodation portion 22a and the second accommodation portion 22b. The collection member 14F further includes the first inflow tube portion 32a and the second inflow tube portion 32b, the first outflow tube portion 34a and the second outflow tube portion 34b, and the first exhaust tube portion 36a and the second exhaust tube portion 36b. That is, the collection kit 10F includes two exhaust portions 40 (the first exhaust portion 40a and the second exhaust portion 40b).

The collection kit 10F includes a junction tube 304. The junction tube 304 includes a first branch stream portion 305b, a second branch stream portion 305c, and a junction 305a. The first outflow tube portion 34a is connected to the first branch stream portion 305b via the relay tube 302. The second outflow tube portion 34b is connected to the second branch stream portion 305c via another relay tube 302. One adapter 310 is connected to the junction 305a via the outflow port 300. As described above, one adapter 310 that is separate from the collection member 14F can be connected to the collection member 14F.

In the collection kit 10F, similarly to the collection kit 10B according to the second embodiment, the platelet product M flows into each of the first accommodation chamber 30a and the second accommodation chamber 30b from above. Thereafter, similarly to the fourth embodiment and the fifth embodiment, the platelet product M accommodated in each of the first accommodation chamber 30a and the second accommodation chamber 30b is transferred to a sampling container (not illustrated).

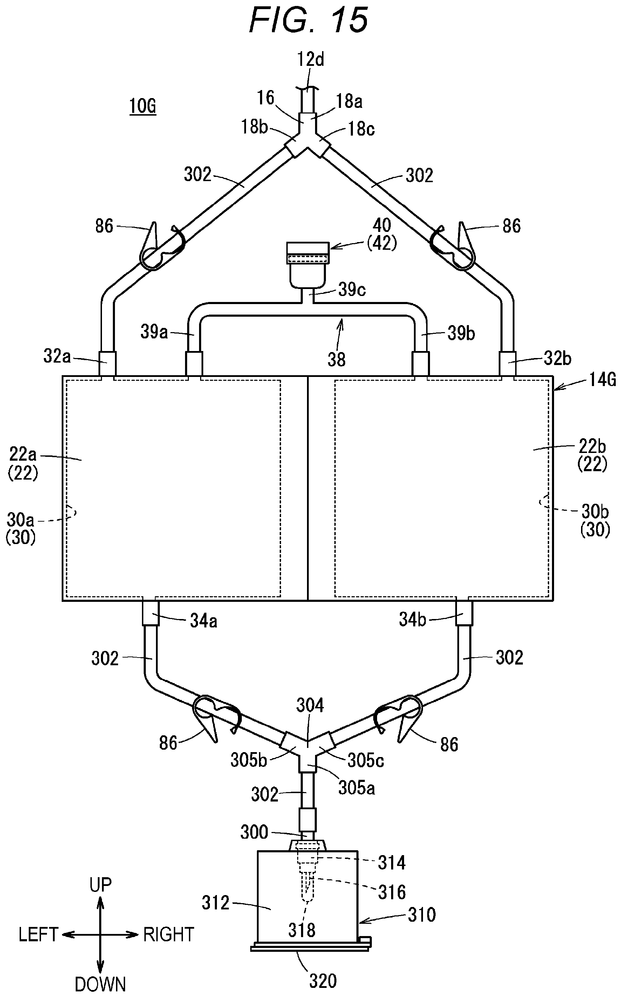

Fig. 15 is a schematic front view of a collection kit 10G according to the seventh embodiment. The collection kit 10G includes a collection member 14G. The collection member 14G includes the first accommodation portion 22a and the second accommodation portion 22b. The collection member 14G further includes the first inflow tube portion 32a and the second inflow tube portion 32b, the first outflow tube portion 34a and the second outflow tube portion 34b, and a collective exhaust tube portion 38. That is, the collection kit 10G includes one exhaust portion 40. In addition, similarly to the sixth embodiment, one adapter 310 that is separate from the collection member 14G can be connected to the collection member 14G.

In the collection kit 10G, similarly to the collection kit 10C according to the third embodiment, the platelet product M flows into each of the first accommodation chamber 30a and the second accommodation chamber 30b from above. In this inflow, the air in the first accommodation chamber 30a flows through the first branch portion 39a and the junction 39c, and then is exhausted to the atmosphere via the exhaust cylinder 42. The air in the second accommodation chamber 30b flows through the second branch portion 39b and the junction 39c, and then is exhausted to the atmosphere via the exhaust cylinder 42.

Thereafter, similarly to the fourth to sixth embodiments, the platelet product M accommodated in each of the first accommodation chamber 30a and the second accommodation chamber 30b is transferred to a sampling container (not illustrated).

In the collection kit 10F (see Fig. 14) and the collection kit 10G (see Fig. 15), the junction tube 304 is connected to the downstream side of the first outflow tube portion 34a and the second outflow tube portion 34b, and the adapter 310 is connected to the junction 305a of the junction tube 304. Thus, one adapter 310 can be easily connected to a plurality of outflow tube portion 34. Since the number of the adapters 310 is one, the configurations of the collection kits 10F and 10G can be simplified.

In the second embodiment to the seventh embodiment, an aspect in which one adapter 310 that is separate from the collection members 14B to 14G can be connected to the collection kits 10B to 10G is exemplified. However, similarly to the collection kit 10A (see Figs. 1 and 2), the collection kits 10B to 10G may integrally include the collection members 14B to 14G and the adapter 310.

As understood from the above, the collection kit is not limited to the collection kit 10A illustrated in Figs. 1 and 2. Note that when the platelet product M is transferred from the first accommodation chamber 30a and the second accommodation chamber 30b of each of the collection kits 10B to 10G to the first sampling container 90a and the second sampling container 90b, respectively, a collection kit jig configured similarly to the collection kit jig 100 illustrated in Figs. 4 and 8 can be used. However, in the kit holding portion 110, a bracket 116 having a shape corresponding to the shapes of the collection kits 10B to 10G is adopted.

The collection kits 10B to 10G according to the second embodiment to the seventh embodiment have the same effect as that of the collection kit 10A according to the first embodiment.

Note that the present invention is not limited to the above disclosure and can take various configurations without departing from the gist of the present invention.

## Claims

1. A collection kit for collecting a collection target accommodated in a medical bag into a plurality of sampling containers, the collection kit comprising:
an inflow tube to which the medical bag is connected; and
a collection member that is connected to a downstream side of the inflow tube,
wherein the collection member includes a plurality of accommodation portions, and a plurality of accommodation chambers that are respectively formed inside the plurality of accommodation portions, and accommodate the collection target,
the collection kit further comprises:
a plurality of outflow tube portions that are connected to the plurality of accommodation chambers and transfer the collection target from the plurality of accommodation portions toward the plurality of sampling containers; and
at least one exhaust portion for respectively discharging air inside the plurality of accommodation chambers to an outside of the collection member, and
the collection member is made of an inflexible material.

2. The collection kit according to claim 1, wherein the collection member includes a plurality of inflow tube portions that are respectively provided in the plurality of accommodation portions and respectively connected to the plurality of accommodation chambers, and the inflow tube is connected to the plurality of inflow tube portions via a branch tube connected to a downstream end portion of the inflow tube.

3. The collection kit according to claim 2, wherein the plurality of inflow tube portions respectively serve as the plurality of outflow tube portions, and the branch tube includes a connection portion to which outflow ports respectively communicating with the plurality of outflow tube portions are connected.

4. The collection kit according to claim 2, further comprising a junction tube in which the plurality of inflow tube portions and the plurality of outflow tube portions are separate bodies, the junction tube being connected to a downstream side of the plurality of outflow tube portions.

5. The collection kit according to claim 1, wherein the collection member includes a tube protection portion that covers the inflow tube.

6. The collection kit according to claim 5, wherein the tube protection portion is integrally continuous with the plurality of accommodation portions.

7. The collection kit according to any one of claims 1 to 6, wherein a material of the collection member is a resin.

8. The collection kit according to claim 7, wherein the resin is transparent or semi-transparent.

9. The collection kit according to claim 1, wherein the exhaust portion includes an exhaust cylinder, and
the exhaust cylinder includes a cylinder body having an opening, and a lid portion capable of opening and closing the opening of the cylinder body.

10. The collection kit according to claim 9, wherein the exhaust cylinder includes a hydrophilic filter.

11. The collection kit according to claim 1, further comprising at least one adapter that is connected to a downstream side of the plurality of outflow tube portions and connectable to the plurality of sampling containers.
